# FASCICULE DE BREVET EUROPEEN

(11) **EP 0 505 892 B1**
(45) Date de publication et mention de la délivrance du brevet: **22.01.1997**
(21) Numéro de dépôt: 92104556.3
(22) Date de dépôt: 17.03.1992
(51) Int. Cl.: C03C 8/02, C03C 8/04, C03C 17/04, C03C 17/34

(54) **Frittes de verre et leur utilisation dans des couches d'arrêt d'émail pour stopper la migration de l'argent**
Glasfritten und ihre Verwendung in Emailbarriereschichten zur Verhinderung der Silbermigration
Glass frits and their use in enamel barrier layers to stop silver migration

(30) Priorité: 25.03.1991 FR 9103571
(43) Date de publication de la demande: 30.09.1992
(73) Titulaire: DEGUSSA AG, 60311 Frankfurt (DE)
(72) Inventeur: Anquetil, Jérome, F-87400 Saint-Leonard-de-Noblat (FR); Dauger, Alain, F-87220 Boisseuil (FR)

(56) Documents cités:
- EP-A- 0 377 062
- DE-C- 755 929
- DE-C- 883 693
- CHEMICAL ABSTRACTS, vol. 83, no. 8, 25 Août 1975, Columbus, Ohio, US; abstract no. 61788Y, I.AZIMOV ET AL.: 'Effect of Sulfur on Crystal-Forming Processes and the Properties of Coatings in Zinc Sulfide Enamels.' page 195 & UZB.KHIM.ZH. vol. 19, no. 1, 1975, pages 70 - 72;
- CHEMICAL ABSTRACTS, vol. 82, no. 2, 13 Janvier 1975, Columbus, Ohio, US; abstract no. 7123U, M.KUCHKAROVA: 'Effect of Boron Oxide on the Physicochemical Properties of Enamels Opacified with Zinc Sulfide.' page 182 ; & FIZ.-KHIM. PROTSESSY SILIKAT.SIST.VYS.TEMP. 1973, pages 129 - 132;
- CHEMICAL ABSTRACTS, vol. 70, no. 22, 2 Juin 1969, Columbus, Ohio, US; abstract no. 99283Z, I.AZIMOV ET AL.: 'Possible Opacifying of Glazes and Enamels with Zinc-Sulfur Compounds-' page 203 ; & UZB.KHIM.ZH. vol.12, no. 5, 1968, pages 69 - 71;
- CHEMICAL ABSTRACTS, vol. 90, no. 14, 2 Avril 1979, Columbus, Ohio, US; abstract no. 11329, page 309 ; & SU-A-622 774 (I.AZIMOV ET AL) 5 Septembre 1978
- CHEMICAL ABSTRACTS, vol. 88, no. 12, 20 Mars 1978, Columbus, Ohio, US; abstract no. 77991Y, page 246 ; & SU-A-581 103 ( G. G. GAPRINDASHVILI ET AL ) 25 Novembre 1977

## Description

La présente invention concerne des - frittes de verre, lesquelles, sérigraphiées seules, en surcouche ou dans un émail, ont le pouvoir de stopper, entre un verre support flotté et un dépôt résistif à base d'argent, la migration thermoactivée des ions Ag⁺.

### Les compositions d'émaux pour verre sont bien connues des spécialistes :

Ils sont constitués en général après cuisson par une phase vitreuse apportée par la ou les frittes utilisées et une phase cristalline pigmentaire colorante et opacifiante auxquelles peuvent être joints d'autres composés pour l'obtention de divers effets. Pouvant être employés dans des applications très diverses, on les utilise pour réaliser entre autres choses des bordures à la périphérie des plaques en verre plat flotté thermoformées, puis trempées pour servir de vitrage sur les véhicules à moteur.

Initialement utilisés dans le seul but de protéger du rayonnement ultraviolet solaire, la colle qui fixe ces volumes en verre -pare-brise, lunette arrière, custode- sur la carrosserie, ces bandeaux d'émaux noirs ou gris ont, par la suite, fait l'objet d'une recherche esthétique et l'on a, en particulier, essayé d'utiliser ces émaux pour cacher les collecteurs latéraux en argent des réseaux de dégivrage des lunettes arrière, ainsi que les points de soudure des cosses de connexion des fils d'alimentation en courant. Or, on constate qu'aucun de ces émaux, de compositions classiques, ne réalise après le cycle thermique de cuisson approprié pour le bombage et la trempe, un masquage effectif complet des collecteurs en argent déposés en superposition et cocuits, ni des points de soudure précités.

Diverses études ont démontré l'existence d'un transport thermo-activé des cations Ag⁺ issus de la couche résistive à travers l'émail jusqu'à l'interface émail/verre, trahissant de ce fait, par un contraste colorimétrique intense, la présence des collecteurs derrière l'émail.

### Des solutions ont été proposées :

Il est connu du brevet US 4 837 383 qu'on veut éviter la migration de l'argent quand on utilise un émail qui se compose d'un fondant de verre à base d'une fritte de verre, de pigments, de l'aluminium élémentaire et/ou de l'oxyde de lithium et ainsi qu'un véhicule pour l'empâtage. La demande de brevet EP-A 0 377 062 revendique l'amélioration de l'opacité à l'argent des émaux grâce a l'adjonction, avant empâtage, de silicium, de bore, de carbone, de plomb et/ou d'argent dans leurs formes élémentaires.

Pour des raisons évidentes de coût (argent), de conditions opératoires particulières nécessitées par l'introduction d'éléments comme le silicium ou le bore fortement réducteurs, de stabilité vis-à-vis des acides (lithium) ou de toxicité (plomb), de telles additions ne donnent pas entière satisfaction. Les émaux mis au point avec de tels ajouts ainsi que l'état actuel de la technique dans ce domaine, montrent que, malgré l'intérêt esthétique que présente la réalisation d'un masquage parfait des collecteurs en argent par un émail, de telles solutions limitent à quelques noirs et à quelques gris, la palette des couleurs aujourd'hui utilisables par l'industrie automobile.

De plus, la qualité du masquage réalisé est pour une grande part influencée par le cycle de cuisson de l'ensemble.

Le but de la présente invention était par conséquent de mettre au point une couche d'arrêt d'émail pour stopper la migration des cations d'argent issus des collecteurs vers le verre pendant la cuisson d'un ensemble de verre plat avec une couche d'arrêt d'émail et au-dessus de cette couche d'émail, une couche résistive d'argent qui ne présente pas les désavantages des systèmes précités.

Ainsi, la présente invention en s'affranchissant à l'empâtage des ajouts susmentionnés offre une solution générale aux problèmes précités.

On a trouvé des frittes de verre non plombeuses à base de borosilicate de Zinc contenant du soufre et/ou des sulfures, qui sont caractérisées en ce qu'elles contiennent de l'oxyde de zinc en quantité de 15 à 70 % en poids, du dioxyde de silicium en quantité de 15 à 40 % en poids et du trioxyde de bore en quantité de 5 à 25 % en poids, en ce que 0,05 à 15 moles % des soufre et/ou de sulfures sont dissous dans la masse vitreuse et en ce que lesdits sulfures sont dissociés au moins en partie.

Suivant une autre caractéristique de l'invention, les frittes contiennent des oxydes métalliques colorants.

Suivant un autre object de l'invention ou a trouvé un procédé pour la mise en oeuvre d'une fritte de verre de l'invention par fusion d'un mélange consistant en (a) des oxydes et/ou des composés qui forment des oxydes en fondant en composition non plombeuse vitrifiable et (b) un ou plusieus composés choisis parmi le soufre, le sulfure de zinc ou d'autres sulfures à des températures de 1000 à 1300 °C, puis refroidissement brusque de la masse en fusion, qui est caractérisé en ce que la composition de la fritte contient de l'oxyde de zinc en quantité de 15 à 70 % en poids, du dioxyde de silicium en quantité de 15 à 40 % en poids et du trioxyde de bore en quantité de 5 à 25 % en poids et en ce que 0,05 à 15 moles % du soufre et/ou des sulfures sont dissous dans la masse vitreuse et lesdits sulfures dissociés au moins en partie.

Suivant un autre object de l'invention on a trouvé des couches d'arrêt d'émail colorées ou incolores contenant comme composé vitrifiable au moins une fritte de verre pour stopper la migration de l'argent pendant la cuisson d'un ensemble de verre plat avec une ou plusieurs couches d'émail, la couche d'arrêt d'émail inclus, et au-dessus de la dernière couche d'émail une couche résistive d'argent, qui sont caractérisées en ce que ladite fritte de verre de la couche d'arrêt est choisie parmi les frittes de verre qui contiennent de l'oxyde de zinc en quantité de 15 à 70 % en poids, du dioxyde de silicium en quantité de 15 à 40 % en poids, du trioxyde de bore en quantité de 5 à 25 % en poids et de 0,05 à 15 moles % de soufre et/ou de sulfures dissous dans la masse vitreuse et en ce que lesdits sulfures sont dissociés au moins en partie.

Il a été trouvé que l'ajout de 0,05 à 15,0 moles% de soufre ou de sulfures , de préférence du sulfure de zinc, a un mélange d'oxydes et/ou de composés non oxydes pour la fabrication d'une fritte de verre confère à cette fritte la propriété de stopper en son sein la diffusion thermoactivée des cations Ag⁺ issus des collecteurs du réseau résistif à base d'argent.

Les frittes sont constituées en plus de soufre et/ou des sulfures d'une association appropriée d'oxydes en composition vitrifiable. L'homme du métier connaît beaucoup de différentes associations d'oxydes donnant après fusion des frittes de verre - voir par exemple les documents Us 4892847, EP-A-0 377 062, EP-A-0 294 502.

Le choix des oxydes conditionne les propriétés des frittes de verre, par exemple le point de ramollissement, le coefficient de dilatation thermique, la stabilité vis-à-vis des bases et des acides. En général, les frittes de verre incolores contiennent des oxydes choisis parmi :

| | | | | | |
|---|---|---|---|---|---|
| SiO₂ | Al₂O₃ | TiO₂ | ZnO | MgO | Li₂O |
| B₂O₃ | Bi₂O₃ | SnO₂ | PbO | CaO | Na₂O |
| | La₂O₃ | ZrO₂ | MnO | BaO | K₂O |
| | V₂O₅ | MoO₃ | | | |

mais la présence d'autres oxydes, par exemple P₂O₅, Cr₂O₃, Fe₂O₃, CuO, NiO, CoO, WO₃, CeO₂ etc... est possible. Selon l'invention des frittes sont à base de borosilicate de zinc du dioxyde de silicium en quantité de 15 à 40 % en poids, du trioxyde de bore en quantité de 5 a 25 % en poids et de l'oxyde de zinc en quantité de 30 a 65 % en poids.

L'introduction du soufre au moment du mélange à sec de la composition avant fusion peut se faire indifféremment sous la forme de soufre fleur ou de sulfures, mais la dissolution et la rétention dans la structure du verre varient selon le mode d'introduction choisi. L'intérêt de ZnS par rapport au soufre élémentaire et aux autres sulfures est qu'il est stable jusqu'à la fusion des eutectiques des oxydes du mélange, et ce n'est qu'au sein de ce mélange fondu que ZnS est dissous progressivement. On évite ainsi, avec ZnS le dégagement de SO₂ et la perte de soufre élémentaire. De plus, il a été observé que le zinc est un élément qui favorise la stabilisation du soufre dans la structure atomique vitreuse.

En principe, on peut introduire dans le mélange à fondre d'autres sulfures que ZnS, par exemple des sulfures de métaux alcalins, alcalino-terreux, ou de Mn, Fe, Co, Ni, Cu, Cd, Sn, Pb, Sb, Bi. Mais il faut signaler que certains de ces sulfures, comme par exemple MnS, FeS, Cu₂S, Cds, PbS, colorent la masse vitreuse ; de plus, l'introduction de ces sulfures en grande quantité peut provoquer une démixtion en phase liquide au sein de la masse en fusion.

Il est spécifié que la présence de soufre élémentaire dans les frittes de l'invention est nécessaire pour l'interaction avec les cations Ag⁺ et que, introduit sous forme de sulfures, ces sulfures sont dissociés - température début de dissociation de ZnS vers 900°C - au moins en partie au cours de la fusion du mélange fusible, et que c'est seulement ensuite le soufre qui réagit avec les cations Ag⁺ dans une couche d'arrêt d'émail contenant la structure vitreuse de telles frittes.

Le principe du procédé de fabrication des frittes de verre de l'invention a été déja susmentionné.

Un broyage ultérieur des granules obtenues fournit la poudre de fritte prête à l'emploi.

Il est préférable de composer ledit mélange en oxydes, mais les oxydes d'alcalins et alcalino-terreux sont introduits souvent sous forme de carbonates. La fusion est exécutée ordinairement dans un creuset en céramique réfractaire ou dans un four portant un revêtement adapté. On broie les fragments de la fritte après l'étonnage - préférentiellement 90 % inférieurs à 20 x 10⁻⁶m - en utilisant les techniques de broyage connues pour les frittes de verre.

Grâce au pouvoir des frittes de verre de l'invention de stopper la migration de l'argent, on peut les utiliser pour réaliser des couches d'arrêt d'émail. Ces émaux peuvent être incolores ou colorés, transparents ou opaques. Il est possible que les couches d'arrêt d'émail contiennent comme composé vitrifiable d'autres frittes, mais en tout cas, le constituant essentiel est une fritte contenant du soufre. Les couches d'arrêt d'émail de l'invention stoppent la migration de l'argent pendant la cuisson des ensembles de verre plat avec une ou plusieurs couches d'émail, la couche d'arrêt inclus, et au-dessus de la dernière couche d'émail, une couche résistive d'argent. La fonction des structures vitreuses de la couche d'arrêt d'émail de stopper la migration de l'argent est aussi effective aux températures requises pour le bombage et la trempe des volumes de verre. La couche d'arrêt d'émail peut se trouver entre le verre, par exemple un tableau de verre plat, et un réseau résistif à base d'argent et masquer les collecteurs en argent si l'émail est coloré et préférentiellement opaque. Or, la couche d'arrêt peut se trouver entre un émail coloré opaque qui est déposé sur le verre et une couche résistive d'argent.

L'émail de la couche d'arrêt non cuit est constitué par une fritte ou plusieurs frittes selon l'invention, des colorants et/ou des opacifiants quand un effet décoratif est souhaité et un véhicule pour l'empâtage - par exemple une huile sérigraphique à base de solvants, de résines naturelles et/ou de matières thermoplastiques. Le véhicule pour l'empâtage est choisi d'après l'emploi final envisagé. Il est essentiel qu'il assure une bonne mise en suspension des particules, et qu'il se consume totalement lors de la cuisson trempe. L'émail de la couche d'arrêt et/ou un émail sous-jacent de composition classique devront répondre à certains impératifs, et pour des émaux décoratifs, avoir notamment une charge pigmentaire suffisante pour satisfaire aux conditions de couleur et d'opacité.

Les émaux des couches d'arrêt selon l'invention sont appliquées par sérigraphie directement ou par l'intermédiaire d'une décalcomanie ou d'un autre support intermédiaire. L'épaisseur moyenne par couche après cuisson est comprise entre 5 x10 ⁻ ⁶m et 50 x 10⁻⁶m.

Dans le cadre de l'interpositionnement d'une couche d'arrêt incolore ou teintée dans la masse entre un émail cru et sec, lui-meme déposé par sérigraphie, et une couche résistive d'argent une désorientation des mailles des toiles des écrans de sérigraphie servant pour l'un ou pour l'autre de ces dépôts sera favorable. Puis la cuisson de tout l'ensemble verre (avec toutes les couches d'émaux) et couche résistive d'argent (par exemple de 60 à 80 % en poids d'argent) est réalisée en une fois.

Le traitement thermique, c'est-à-dire la cuisson suivie d'une trempe, des ensembles de verre/couche d'arrêt d'émail/couche résistive d'argent ou de verre/couche d'émail conventionnel/couche d'arrêt d'émail/couche résistive d'argent, est réalisé dans différents types de fours suivant la destination des vitrages émaillés. La température pour la cuisson est aussi déterminée par la composition de la/ou des frittes utilisées dans les émaux. En général, la température pour la cuisson varie entre 450°C et 800°C, de préférence entre 550°C et 750°C.

Suite aux essais - voir l'exemple 10 - il a été trouvé que dans les émaux décrits dans les documents DE-OS 38 32 937 et DE-OS 38 38 196 et constitués par une fritte conventionnelle, un véhicule et en plus un sulfure de cuivre, de zinc, de fer, d'étain ou d'aluminium, n'ont aucune action favorable pour l'arrêt des cations Ag⁺, c'est-à-dire qu'aucune interaction effective sulfure - Ag⁺ n'est décelable.

L'interaction S - Ag⁺ et l'arrêt des cations Ag⁺ qui s'ensuit est donc une qualité propre aux émaux dont les frittes contiennent du soufre élémentaire et/ou un sulfure dissous dans la masse vitreuse. Toute fritte, appliquée seule ou associée à des pigments, et ne contenant pas de soufre dissous, ne confère en aucun cas à la couche réalisée, toutes choses égales par ailleurs, la propriétés d'arrêt des cations Ag⁺ lors de leur migration thermoactivée vers l'interface avec le verre. En plus, l'introduction de sulfures directement à l'émail comme dans les documents susmentionnés, c'est-à-dire comme charge pigmentaire associée, provoque une importante dérive colométrique, alors que l'utilisation d'une fritte selon l'invention (contenant du soufre) n'en provoque aucune.

L'invention sera expliquée plus en détail à l'aide de l'unique figure et de la description des exemples indiqués à la suite.

### Exemples 1 à 4 :

On a préparé, pour des couches d'arrêt incolores, les frittes de compositions suivantes :

| Composition de la fritte | 1 | 2 | 3 | 4 |
|---|---|---|---|---|
| | moles % | | | |
| ZnS | 1,98 | 3,99 | 4,82 | 5,00 |
| SiO₂ | 21,86 | 34,99 | 19,76 | 29,00 |
| B₂O₃ | 12,64 | 20,08 | 11,42 | 18,00 |
| ZnO | 63,52 | 30,09 | 64,00 | 35,45 |
| Na₂O | | 6,30 | | 6,00 |
| BaO | | 4,55 | | 4,65 |
| ZrO₂ | | | | 1,90 |

Mélange à sec des oxydes, excepté Na₂O et BaO qui ont été additionnés avec Na₂CO₃ et BaCO₃, fusion de 1150°C à 1200°C, étonnage dans de l'eau, broyage, étuvage. Pour obtenir la couche d'arrêt d'émail, bon empâte les frittes avec un véhicule et on applique l'émail par sérigraphie.

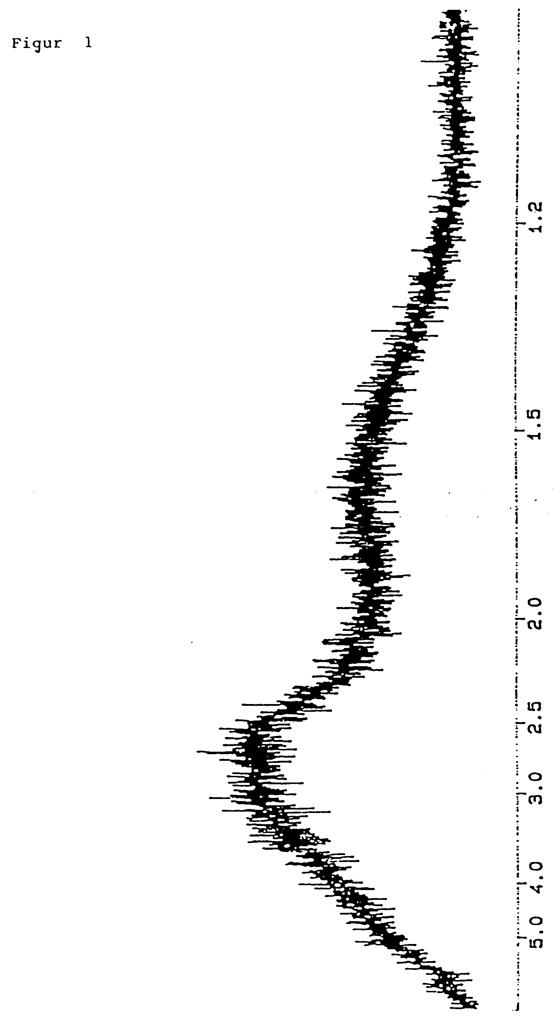

La figure 1 montre le spectre de diffraction RX obtenu avec la fritte de l'exemple 3.

### Exemples 5 et 6 :

L'introduction du soufre sous la forme de soufre fleur ou de sulfure de cadmium.

| Composition du mélange pour la fusion | 5 | 6 |
|---|---|---|
| | Moles % | |
| S | 15,00 | - |
| CdS | - | 6,04 |
| SiO₂ | 18,95 | 20,95 |
| B₂O₃ | 10,97 | 12,11 |
| ZnO | 55,08 | 60,89 |

Procédé de fabrication des frittes comme dans les exemples 1 à 4.

### Exemple 7 :

La fritte peut être teintée dans la masse tout en lui conservant ses propriétés d'arrêt. Dans l'exemple 7 la dissolution d'un pigment inorganique coloré noir du type spinelle chromite de cuire, permet l'obtention d'une fritte brune conservant ses propriétés d'arrêt.
Mélange à sec de la fritte de l'exemple 3 (85,36 % en poids) avec un pigment spinelle noir (14,64 % en poids), fusion, étonnage, broyage et étuvage pour obtenir une frittez intermédiaire.

La fritte brune se compose de 70 % en poids de la fritte de l'exemple 1 et de 30 % en poids de la fritte intermédiaire sus-mentionnée. Pour obtenir l'émail pour une couche d'arrêt : délitage des deux frittes dans l'alcool pour mélange homogène, étuvage, empâtage.

### Exemples 8 à 9 :

Emaux noirs et gris, opaques et masquants, seuls, les collecteurs en argent.

| Composition de l'émail | 8 | 9 |
|---|---|---|
| | en poids | |
| Fritte de l'exemple 4 | 75 | 77,5 |
| Pigment noir type spinelle chromites de cuivre | 25 | 12,5 |
| Dioxyde de titane | | 10,0 |
| Couleur de l'émail | noir | gris |

Délitage des composés dans l'alcool, étuvage et empâtage pour application comme couche d'arrêt.

### Exemple 10 (non inventif, mais selon DE-OS 38 32 937 et 38 38 196).

Essais d'introduction de sulfures dans l'émail (composition en parts en poids).

| | a | b | b | d | e | f |
|---|---|---|---|---|---|---|
| Poudre D'émail vitreux VA 641 (DPC LIMOGES) | 7,2 | 7,2 | 7,2 | 7,2 | 7,2 | 7,2 |
| ZnS (ALDRICH) | 1,6 | | | | | |
| ZnS (PROLABO) | | 1,6 | | | | |
| Cu₂S | | | 1,6 | | | |
| FeS | | | | 1,6 | | |
| CdS | | | | | 1,6 | |
| MnS | | | | | | 1,6 |
| VEHICULE MX 54 (DPC LIMOGES) | 2,8 | 2,8 | 2,8 | 2,8 | 2,8 | 2,8 |
| COULEUR D'EMAIL | GRIS BLEUTE | GRIS BLEUTE | GRIS ROUGE FONCE | GRIS BRUNATRE | GRIS VERT | GRIS ROUGE |
| DIFFERENCES COLOMETRIQUES Δ E PAR RAPPORT A L'EMAIL VA 641 COMME REFERENCE | 13,40 | 10,11 | 6,15 | 14,80 | 5,30 | 11,40 |

Application des émaux sur verre (4 mm) ; superposition du verre émaillé avec la pâte d'argent SP 1230 (Degussa AG) ; cuisson trempe verticale à 680°C pendant 3,5 minutes. Tous les émaux de l'exemple 10 n'ont aucune action pour stopper la migration de l'argent.

## Revendications

1. Frittes de verre non plombeuses à base de borosilicate de zinc contenant du soufre et/ou des sulfures, caractérisées en ce qu'elles contiennent de l'oxyde de zinc en quantité de 15 à 70 % en poids, du dioxyde de silicium en quantité de 15 à 40 % en poids et du trioxyde de bore en quantité de 5 à 25 % en poids, en ce que 0,05 à 15 moles % des soufre et/ou de sulfures sont dissous dans la masse vitreuse et en ce que lesdits sulfures sont dissociés au moins en partie.

2. Frittes de verre selon la revendication 1, caractérisées en ce qu'elles contiennent, comme sulfure, le sulfure de zinc.

3. Frittes de verre selon la revendication 1 ou 2, caractérisées en ce qu'elles contiennent de 30 à 65 % en poids d'oxyde de zinc.

4. Procédé pour la mise en oeuvre d'une fritte de verre suivant l'une quelconque des revendications 1 à 3 par fusion d'un mélange consistant en (a) des oxydes et/ou des composés qui forment des oxydes en fondant en composition non plombeuse vitrifiable et (b) un ou plusieus composés choisis parmi le soufre, le sulfure de zinc ou d'autres sulfures à des températures de 1000 a 1300 °C, puis refroidissement brusque de la masse en fusion, caractérisé en ce que la composition de la fritte contient de l'oxyde de zinc en quantité de 15 à 70 % en poids, du dioxyde de silicium en quantité de 15 à 40 % en poids et du trioxyde de bore en quantité de 5 à 25 % en poids et en ce que 0,05 à 15 moles % du soufre et/ou des sulfures sont dissous dans la masse vitreuse et lesdits sulfures dissociés au moins en partie.

5. Couches d'arrêt d'émail colorées ou incolores contenant comme composé vitrifiable au moins une fritte de verre pour stopper la migration de l'argent pendant la cuisson d'un ensemble de verre plat avec une ou plusieurs couches d'émail, la couche d'arrêt d'émail inclus, et au-dessus de la dernière couche d'émail une couche résistive d'argent, caractérisées en ce que ladite fritte de verre de la couche d'arrêt est choisie parmi les frittes de verre qui contiennent de l'oxyde de zinc en quantité de 15 à 70 % en poids, du dioxyde de silicium en quantité de 15 à 40 % en poids, du trioxyde de bore en quantité de 5 à 25 % en poids et de 0,05 à 15 moles % de soufre et/ou de sulfures dissous dans la masse vitreuse et en ce que lesdits sulfures sont dissociés au moins en partie.

6. Couches d'arrêt d'émail selon la revendication 5, caractérisées en ce que ladite fritte de verre contient du sulfure de zinc.

7. Couches d'arrêt d'émail selon la revendication 5 ou 6, caractérisées en ce que ladite fritte de verre contient de l'oxyde de zinc en quantité de 30 à 65 % en poids.

8. Couches d'arrêt d'émail selon l'une quelconque des revendications 5 à 7, caractérisées en ce que ladite fritte de verre contient des oxydes métalliques colorants.

9. Utilisation de frittes de verre selon l'une quelconque des revendications 1 à 3 ou fabriquées par le procédé de la revendication 4 pour réaliser des couches d'arrêt d'émail pour stopper la migration de l'argent d'une couche resistive d'argent vers le verre pendant la cuisson à des températures entre 450 et 750 °C d'un ensemble sur verre plat avec une ou plusieurs couches d'émail, la couche d'arrêt d'émail inclus, et au-dessus une couche résistive d'argent.

## Claims

1. Lead-free glass frits based on zinc borosilicate containing sulphur and/or sulphides, characterized in that they contain zinc oxide in a quantity of 15 to 70 % by weight, silicon dioxide in a quantity of 15 to 40 % by weight and boron trioxide in a quantity of 5 to 25 % by weight, in that 0.05 to 15 moles % of sulphur and/or sulphides are dissolved in the vitreous mass and in that the said sulphides are dissociated at least in part.

2. Glass frits according to claim 1, characterized in that they contain, as sulphur, zinc sulphide.

3. Glass frits according to claim 1 or 2, characterized in that they contain 30 to 65 % by weight of zinc oxide.

4. Process for preparing a glass frit according to any one of claims 1 to 3 by fusing a mixture consisting of (a) oxides and/or compounds which form oxides on melting in a vitrifiable lead-free composition and (b) one or more compounds selected from sulphur, zinc sulphide or other sulphides at temperatures of 1000 to 1300°C, then cooling the fused mass suddenly, characterized in that the composition of the frit contains zinc oxide in a quantity of 15 to 70 % by weight, silicon dioxide in a quantity of 15 to 40 % by weight and boron trioxide in a quantity of 5 to 25 % by weight, and in that 0.05 to 15 moles % of sulphur and/or sulphides are dissolved in the vitreous mass and the said sulphides are dissociated at least in part.

5. Barrier layers of coloured or colourless enamel containing, as a vitrifiable compound, at least one glass frit to stop the migration of silver during firing of a combination of flat glass with one or more enamel layers, including the enamel barrier layer, and above the latter enamel layer a silver resistive layer, characterized in that the said glass frit of the barrier layer is selected from glass frits which contain zinc oxide in a quantity of 15 to 70 % by weight, silicon dioxide in a quantity of 15 to 40 % by weight and boron trioxide in a quantity of 5 to 25 % by weight; and 0.05 to 15 moles % of sulphur and/or sulphides dissolved in the vitreous mass and in that the said sulphides are dissociated at least in part.

6. Enamel barrier layers according to claim 5, characterized in that the said glass frit contains zinc sulphide.

7. Enamel barrier layers according to claim 5 or 6, characterized in that the said glass frit contains zinc oxide in a quantity of 30 to 65 % by weight.

8. Enamel barrier layers according to any one of claims 5 to 7, characterized in that the said glass frit contains colouring metal oxides.

9. Use of glass frits according to any one of claims 1 to 3 or manufactured by the process of claim 4 for preparing enamel barrier coats for stopping the migration of silver from a silver resistive layer to the glass during firing at temperatures of between 450 and 750°C of an assembly on flat glass with one or more enamel layers, including the enamel barrier layer, and above a silver resistive layer.

## Patentansprüche

1. Bleifreie schwefel- und/oder sulfidhaltige Glasfritten auf Basis von Zink-borosilicat gefunden,
dadurch gekennzeichnet,
daß sie 15 bis 70 Gew.-% Zinkoxid, 15 bis 40 Gew.-% Siliciumdioxid und 5 bis 25 Gew.-% Bortrioxid enthalten, und dadurch, daß 0,05 bis 15,0 Mol-% des Schwefels und/oder der Sulfide in der Glasmasse gelöst sind, und dadurch, daß diese Sulfide zumindest zum Teil dissoziiert sind.

2. Glasfritten nach Anspruch 1,
dadurch gekennzeichnet,
daß sie als Schwefel Zinksulfid enthalten.

3. Glasfritten nach Anspruch 1 oder 2,
dadurch gekennzeichnet,
daß sie 30 bis 65 Gew.-% Zinkoxid enthalten.

4. Verfahren zur Herstellung einer Glasfritte nach einem der Ansprüche 1 bis 3 durch Schmelzen einer Mischung aus (a) Oxiden und/oder Oxidverbindungen, die beim Schmelzen in einem bleifreien Schmelzversatz Oxide bilden, und (b) ein oder mehreren Schwefelverbindungen, Zinksulfid oder anderer Sulfide, bei Temperaturen von 1000 bis 1300°C, anschließendem Anschrecken der Schmelzmasse,
dadurch gekennzeichnet,
daß der Fritteversatz 15 bis 70 Gew.-% Zinkoxid, 15 bis 40 Gew.-% Siliciumdioxid und 5 bis 25 Gew.-% Bortrioxid enthält, und dadurch, daß 0,05 bis 15 Mol-% des Schwefels und/oder der Sulfide in der Glasmasse gelöst, und daß diese Sulfide zumindest zum Teil dissoziiert sind.

5. Eingefärbte oder farblose Emailschichten, die als Glasbestandteil mindestens eine Glasfritte enthalten, um die Silberionenmigration während des Brennprozesses einer Glasscheibe mit einer oder mehreren Emailschichten, einschließlich der Blockierschicht und darüber einer Silberleiterschicht, zu blockieren, dadurch gekennzeichnet, daß die besagte Glasfritte der Blockierschicht ausgewählt wird aus Glasfritten, die 15 bis 70 Gew.-% Zinkoxid, 15 bis 40 Gew.-% Siliciumdioxid und 5 bis 25 Gew.-% Bortrioxid enthält und 0,05 bis 15 Mol-% Schwefel und/oder Sulfide, die in der Glasmasse gelöst sind, und dadurch, daß diese Sulfide zumindest zum Teil dissoziiert sind.

6. Emailschichten zur Blockierung der Silberionenmigration nach Anspruch 5,
dadurch gekennzeichnet,
daß die besagte Glasfritte Zinksulfid enthält.

7. Emailschichten zur Blockierung der Silberionenmigration nach Anspruch 5 oder 6,
dadurch gekennzeichnet,
daß die besagte Glasfritte 30 bis 65% Zinkoxid enthält.

8. Emailschichten zur Blockierung der Silberionenmigration nach einem der Ansprüche 5 bis 7,
dadurch gekennzeichnet,
daß die besagte Glasfritte färbende Metalloxide enthält.

9. Einsatz der Glasfritten nach einem der Ansprüche 1 bis 3 oder Herstellung nach dem Verfahren gemäß Anspruch 4 zur Realisierung einer Emailschicht, die die Silberionenmigration aus der Silberleiterschicht zum Glas während des Brennprozesses einer Glasscheibe mit einer oder mehreren Emailschichten, einschließlich der Blockierschicht und darüber einer Silberleiterschicht, bei Temperaturen zwischen 450 und 750°C blockiert.
